# EUROPEAN PATENT APPLICATION

(11) **EP 4 564 140 A1**
(43) Date of publication of application: **04.06.2025**
(21) Application number: 24160364.6
(22) Date of filing: 28.02.2024
(51) Int. Cl.: G06F 3/02, G06F 1/16

(54) **INFORMATION INPUT DEVICE**

(30) Priority: 01.12.2023 CN 202311635202
(71) Applicant: Ling, Xiao, 350001 Fuzhou Fujian (CN)
(72) Inventor: XIAO, Xiaosong, Fuzhou, Fujian, 350001 (CN); PENG, Youyang, Fuzhou, Fujian, 350001 (CN); SUN, Lingxiang, Fuzhou, Fujian, 350001 (CN); NI, Zhihua, Fuzhou, Fujian, 350001 (CN); HE, Kaiwei, Fuzhou, Fujian, 350001 (CN)
(74) Representative: Cabinet Chaillot

(57) **Abstract**

Disclosed is an information input device, comprising a keyboard body, wherein the keyboard body is composed of a left-hand keyboard and a right-hand keyboard, both of which are held in the palms of the left and right hands for operation; the key panel is arranged on the surface of the casing, and the PCB electronic control board and the battery are arranged inside the casing; the back of the keyboard body is attached to the palm of the hand through a connection fixing piece, and the fingertips are stretched and bent to lightly touch the keys on the key panel to complete the control operation; the row containing the letters in QWERTYUIOP among the three rows is placed closer to the user's wrist. The invention divides a keyboard into two parts for combined use, so that the volume of each part is reduced and is easy to wear.

## Description

### 1. Technical Field

The invention relates to the technical field of wearable keyboards, and specifically refers to an information input device.

### 2. Background Art

The law of innovation and replacement of popular products in history is: portable replaces fixed, wearable replaces portable, such as magnifying glass-pince-nez-glasses; desk clock-pocket watch-watch, etc. The replacement and innovation of fixed PC computers-portable notebook computers-portable mobile phones in your pocket-wearable computers will not be an exception.

As everyone knows, the keyboard and mouse input window display and output of PC computers and the input and output display of smart phone touch screen human-computer interaction are key shortcomings in the replacement and innovation of these two major computing platforms. If PC computers need to be innovated and enter the mobile field, mobile human-computer interaction (mobile keyboard and mouse input-mobile computer host-mobile screen output display) is also a key shortcoming technology. Among them, AR augmented reality glasses that output display on mobile computer screens have been invented for more than 20 years. Nowadays, many companies can produce smart glasses products that use AR technology to output PC computer image display; As early as 2007, mobile computers with PC functions such as ThinkPad X61, HTC, Lumia 950, etc. have been sold one after another; therefore, the new generation of wearable computers uniquely lacks a mobile keyboard device for fine input, which has become the only key shortcoming in mobile human-computer interaction. This problem means that PCs, which have been around for 42 years, and smartphones, which have been around for 16 years, have never been able to function as mobile PCs. Many industry giants have tried to develop mobile PCs but failed. Even laptops only enable the keyboard to be portable. The Lumia 950 smartphone launched by Microsoft in 2015 with PC functions was eventually abandoned due to the failure of using an inefficient mobile phone touch screen keyboard; although the Vision Pro headset recently released by Apple can output multi-screen computer screen displays in the real environment in the glasses, it uses computer decoding input that captures human primitive and rough gesture language images, without the sophisticated keyboard input required by PC computers, so that PC calculations can only be completed with keyboards at fixed points indoors, and wider mobile space calculations outdoors cannot be achieved.

There are a large number of keyboards that have applied for patents in the existing technology, but the number of movable keyboards is very small. Most of them can only be carried around and used. Among the very few keyboards that can be used movably, their practical performance has not yet been accepted by the public. The specific analysis is as follows:
1. Japanese Patent 2005-148855 is to tie the left and right keyboards to the two thighs. To move the keys, the left hand must move with the left foot and the right hand with the right foot in the same direction at the same time. It goes against people's habit of moving their hands and feet on the same side in opposite directions at the same time when moving, and can only be used while standing or sitting down after being portable. It cannot be used movably, and it is not beautiful.
2. U.S. patent US10691205bB1 (45) is a wristband-type five-finger tapping input device without a physical keyboard and a mobile keyboard function. It uses radar and camera image recognition to track various tapping movements of five-finger arrangements and combinations. The production cost of the product is high, and the learning cost for users to memorize nearly a hundred finger combinations is also high, making it difficult for the public to adopt it.
3. U.S. patent US2012/0293935A1 is a wearable computer device. The whole machine with keyboard is hung in front of the chest and abdomen by a shoulder strap. Although it can be used movably, the device is large and heavy. It is easy to fatigue when using the keys with your hands bent and suspended in the air, and it is not beautiful.
4. Chinese patent CN112578914A is a wearable finger positioning coding device. The numbers 0 to 9 are used to represent 10 fingers, which are output in a permutation and combination manner. The user has to memorize the finger permutations and character combinations of nearly a hundred keystrokes, and the learning cost is very high.
5. Chinese patent CN209447120U is a wearable glove keyboard that uses 10 pressure sensors and 10 bending sensors for robot fingers. The production cost is extremely high, and the form of the glove does not conform to public habits. It is not suitable for summer, and is inconvenient and inaesthetic to wear regularly.

Therefore, how to provide an information input device that is ergonomically compact, lightweight, easy to carry, convenient for mobile use, capable of efficient touch typing, in line with public habits, low learning cost, low production cost, stable, simple, and beautiful has become an urgent problem that needs to be solved.

### 3. Summary of the Invention

The technical problem to be solved by the invention is to provide a keyboard and mouse device that can be used while sitting, lying, standing, or walking. The device has the performance characteristics of being small, lightweight, easy to carry, capable of efficient touch typing, fine input, low production cost, low learning cost, simple structure, stable storage and use, and suitable for the general public, which innovatively merges PC computers and smart phones into a new next-generation larger wearable mobile computing platform, and provides a key shortcoming technology device for human-computer interactive input.

In order to solve the above technical problems, the technical solutions provided by the invention are: an information input device, comprising a keyboard body, wherein the keyboard body is composed of a left-hand keyboard and a right-hand keyboard, both of which are held in the palms of the left and right hands for operation;
both the left-hand keyboard and the right-hand keyboard comprise a key panel, a PCB electronic control board containing a microprocessor, a battery and a casing; the key panel is arranged on the surface of the casing, and the PCB electronic control board and the battery are arranged inside the casing;
the back of the keyboard body is attached to the palm of the hand through a connection fixing piece, and the fingertips are stretched and bent to lightly touch the keys on the key panel to complete the control operation;
the keys on the left-hand keyboard and the right-hand keyboard are arranged in horizontal rows and vertical columns; the number of horizontal rows on each keyboard is not less than five, and the number of vertical columns on each keyboard is not less than five; the 26 English letters on the keys are arranged in three rows according to the QWERTY keyboard, and are arranged continuously on the left-hand keyboard and the right-hand keyboard; the row containing the letters in QWERTYUIOP among the three rows is placed closer to the user's wrist.

It should be noted that the keyboard of the present invention must be controlled by touch typing because the keys cannot be seen when being held in the palm of the hand and it is safe for walking. The arrangement of the keys on the QWERTY keyboard was chosen because this keyboard is used the most in the world, and there are many people who are familiar with its control fingerings and capable of touch typing, which greatly reduces the time it takes to become familiar with or learn touch typing on this keyboard. When first practicing control, you can use the virtual keyboard while typing while looking at the screen.

Further, the keyboard body is provided with a vibration motor and a buzzer, and both are communicatively coupled to the microprocessor of the PCB electronic control board; after the key is effectively lightly touched, the vibration motor and/or the buzzer immediately sends a feedback signal to the fingertips and/or ears of the person pressing the key.

Further, the keyboard body is provided with a function switch key, through which the keyboard input function of the key panel is switched to a skateboard mouse function or a writing pad function; when the key panel is switched to one of the skateboard mouse function or the writing pad function, the left-hand keyboard and the right-hand keyboard each activate a different one of the two functions for simultaneous use.

Further, the PCB electronic control board is provided with a wireless connection module unit capable of inputting human-computer interaction control instructions to other intelligent devices.

The advantages of the invention compared with the prior art are: the invention divides a keyboard into two parts for combined use, so that the volume of each part is reduced and is easy to wear; the keyboard is fixed in the palm of the hand by the connection fixing piece, making it convenient to bend your fingers for direct operation; finger bending allows the fingertips to lightly touch the key panel, reducing the contact area and allowing the keyboard to be greatly reduced, which brings great convenience to the user by moving their fingers slightly in the palm of the hand; the QWERT keyboard with separate settings for left and right hands allows safe walking and touch typing and is easy to learn; it is provided with a communication unit that is wirelessly connected to other smart devices to facilitate the input of control instructions for other smart devices, allowing the wearable smart device to achieve precise human-computer interaction control of standing, sitting, lying down and moving PC computers.

### 4. Brief Description of Accompany Drawings

FIG. 1 is a first schematic structural diagram of the information input device according to the invention.
FIG. 2 is a schematic cross-sectional structural diagram of the information input device according to the invention.
FIG. 3 is a second schematic structural diagram of the information input device according to the invention.
FIG. 4 is a working principle diagram of the keyboard/mouse/handwriting pad.
FIG. 5 is a schematic diagram of the keyboard/mouse/handwriting pad circuit. The figure in the dotted frame in the figure indicates that the intersection of the horizontal sensor piece and the vertical sensor piece forms a touch button. Each key controls one horizontal input and one vertical input at the same time.

AS shown in the figures: 1 refers to the left-hand keyboard; 2 refers to the right-hand keyboard; 3 refers to the key panel; 4 refers to the PCB electronic control board; 5 refers to the battery; 6 refers to the casing; 7 refers to the key; 8 refers to the key character; 9 refers to the connection fixing piece; 10 refers to the vibration motor; 11 refers to the buzzer; 12 refers to the selection switch; 13 refers to the function switch key; 14 refers to the mode light; 15 refers to the wireless connection module unit.

### 5. Specific Embodiment of the Invention

In the description of the invention, it needs to be understood that the orientation or positional relationship indicated by the terms "center", "up", "down", "left", "right", "vertical", "horizontal", "inner", "outer", etc. are based on the orientation or positional relationship shown in the drawings, which are only for the convenience of describing the invention and simplifying the description, rather than indicating or implying that the device or element referred to must have a specific orientation, be constructed and operated in a specific orientation, and therefore cannot be understood as a limitation of the invention.

In the invention, unless otherwise clearly defined and limited, the terms "installed", "connected", "fixed" and other terms should be interpreted broadly; for example, it can be a fixed connection, a detachable connection or an integral connection; it can be a mechanical connection or an electrical connection; it can be a direct connection or an indirect connection through an intermediary, and it can be a connection between two components. For those of ordinary skill in the art, the specific meanings of the above terms in the invention can be understood according to specific circumstances.

The information input device according to the invention will be described in further detail hereinafter with reference to the drawings.

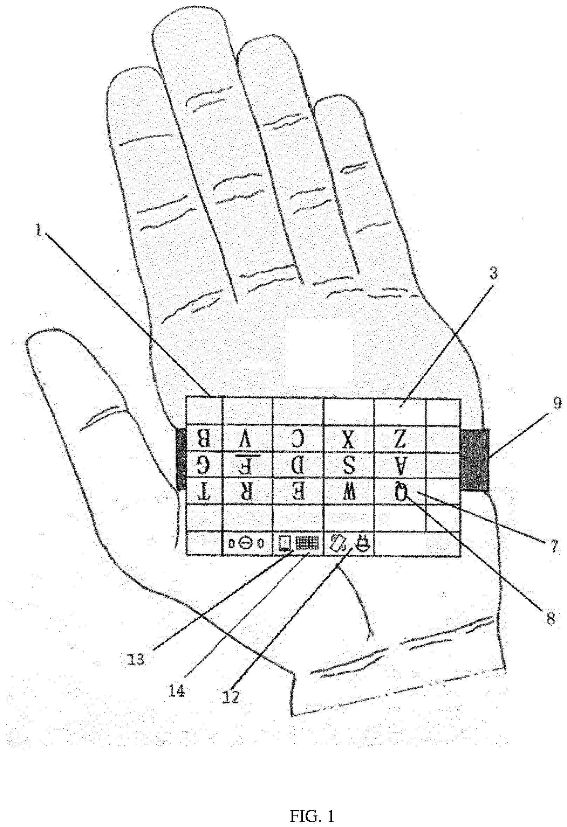

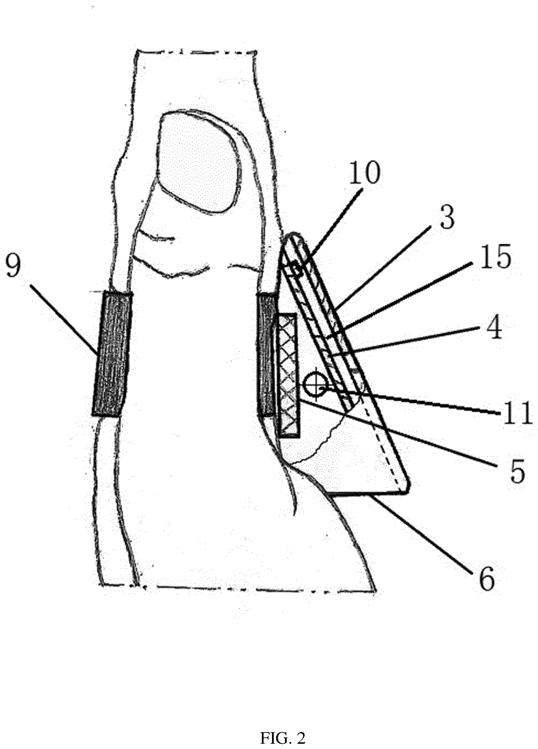

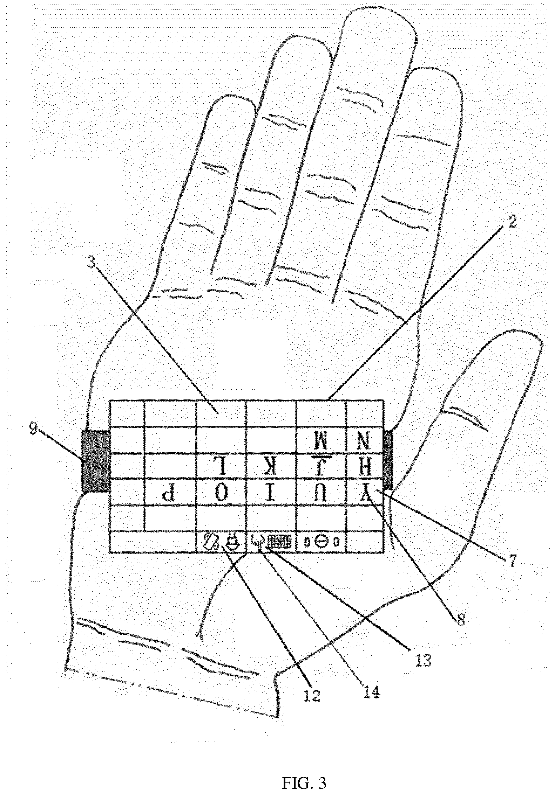

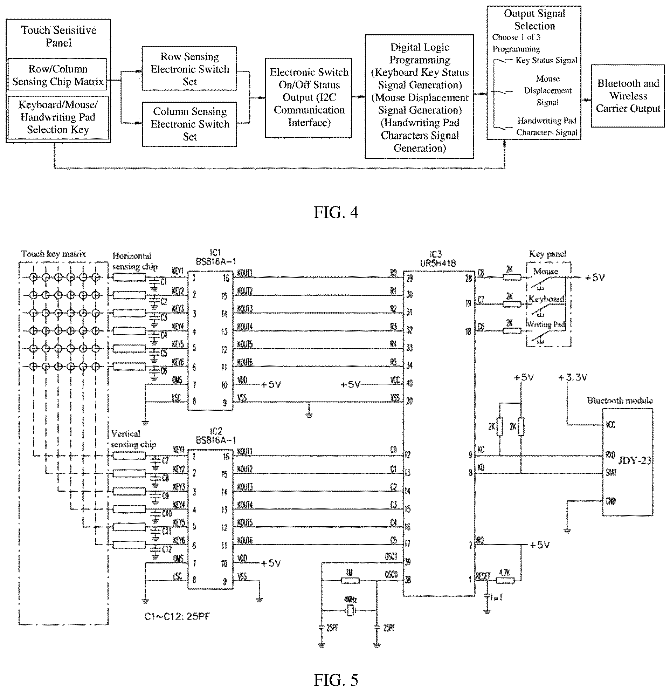

With reference to FIGS. 1-4, the specific implementation process of the information input device according to the invention is as follows:
an information input device that can implement human-computer interactive input while moving, and can be controlled by touch typing while sitting, lying, standing or walking; the keyboard body is composed of a left-hand keyboard 1 and a right-hand keyboard 2, both of which are held in the palms of the left and right hands for operation; both the left-hand keyboard 1 and the right-hand keyboard 2 comprise at least four components: a key panel 3, a PCB electronic control board 4 containing a microprocessor, a battery 5 and a casing 6; the key panel 3 is arranged on the surface of the casing 6, and the remaining PCB electronic control board 4 and the battery 5 are arranged inside the casing 6;
when the left-hand keyboard 1 and the right-hand keyboard 2 are held in the hand for operation, the palm of the hand faces the back direction of the key panel 3, and the fingertips are stretched and bent to lightly touch the keys 7 on the touch screen to complete the key operation;
the keys 7on the left-hand keyboard 1 and the right-hand keyboard 2 are arranged in horizontal rows and vertical columns; the number of horizontal rows on each keyboard is not less than five, and the number of vertical columns on each keyboard is not less than five; the 26 English letters on the keys 7 are arranged in three rows according to the QWERTY keyboard; in the three horizontal rows of English letter key areas on the key panel 3 of the left-hand keyboard 1 and the right-hand keyboard 2, the upper row is "QWERTYUIOP", the middle row is "ASDFGHJKL", and the lower row is "ZXCVBMN"; the row containing the letters in QWERTYUIOP among the three rows is placed closer to the user's wrist (opposite to the traditional keyboard orientation); the invention does not limit the arrangement of the keys 7 other than English letters.

In one embodiment of the invention, the key panel 3 adopts a capacitive touch screen or a resistive touch screen, and the key panel 3 is communicatively coupled to the microprocessor of the PCB electronic control board 4.

In one embodiment of the invention, the bottom plate of the casing 6 is connected to a connection fixing piece 9 which is one of elastic buckle, Velcro strap, elastic band, palm cover, glove or watch strap buckle, etc., to fix the bottom plate to the palm position; the color of the connection fixing piece 9 is yellow, white or black (for the user to choose independently).

In one embodiment of the invention, the keyboard body is provided with a vibration motor 10 and a buzzer 11, and both are communicatively coupled to the microprocessor of the PCB electronic control board 4, which serve as devices for sending feedback signals to the fingertips and ears of the person pressing the keys immediately after effectively touching the keys 7 (a selection switch 12 for selecting one of three options to control vibration, buzzing, or vibration-free and mute).

In one embodiment of the invention, the keyboard body is provided with a function switch key 13, through which the keyboard input function of the key panel 3 is switched to a skateboard mouse function or a writing pad function; when the key panel 3 is switched to one of the skateboard mouse function or the writing pad function, the left-hand keyboard 1 and the right-hand keyboard 2 each activate a different one of the two functions for simultaneous use; (for example: when the right keyboard is switched into the mouse function, the left keyboard is switched into the writing pad function, and after controlling the mouse with the fingers of the right hand, the user can immediately write and input on the left writing pad).

Preferably, the keyboard body is provided with a mode light 14, and the mode light 14 is connected to the microprocessor; the mode light 14 includes a handwriting mode light, a keyboard mode light, and a mouse mode light.

In one embodiment of the invention, the PCB electronic control board 4 is provided with a wireless connection module unit 15 capable of inputting human-computer interaction control instructions to other intelligent devices.

The invention and the embodiments thereof are described hereinabove, and this description is not restrictive. What is shown in the drawings is only one of the embodiments of the invention, and the actual structure is not limited thereto. All in all, structural methods and embodiments similar to the technical solution without deviating from the purpose of the invention made by those of ordinary skill in the art without creative design shall all fall within the protection scope of the invention.

## Claims

1. An information input device, comprising a keyboard body, wherein the keyboard body is composed of a left-hand keyboard (1) and a right-hand keyboard (2), both of which are held in the palms of the left and right hands for operation;
both the left-hand keyboard (1) and the right-hand keyboard (2) comprise a key panel (3), a PCB electronic control board (4) containing a microprocessor, a battery (5) and a casing (6); the key panel (3) is arranged on the surface of the casing (6), and the PCB electronic control board (4) and the battery (5) are arranged inside the casing (6);
the back of the keyboard body is attached to the palm of the hand through a connection fixing piece (9), and the fingertips are stretched and bent to lightly touch the keys (7) on the key panel (3) to complete the control operation;
the keys (7) on the left-hand keyboard (1) and the right-hand keyboard (2) are arranged in horizontal rows and vertical columns; the number of horizontal rows on each keyboard is not less than five, and the number of vertical columns on each keyboard is not less than five; the 26 English letters on the keys (7) are arranged in three rows according to the QWERTY keyboard, and are arranged continuously on the left-hand keyboard (1) and the right-hand keyboard (2); the row containing the letters in QWERTYUIOP among the three rows is placed closer to the user's wrist.

2. The information input device according to claim 1, wherein the key panel (3) adopts a capacitive touch screen or a resistive touch screen, and the key panel (3) is communicatively coupled to the microprocessor of the PCB electronic control board (4).

3. The information input device according to claim 2, wherein the connection fixing piece (9) adopts an elastic buckle, a Velcro strap, an elastic band, a palm cover, a glove, or a watch strap buckle.

4. The information input device according to claim 3, wherein the keyboard body is provided with a vibration motor (10) and a buzzer (11), and both are communicatively coupled to the microprocessor of the PCB electronic control board (4); after the key (7) is effectively lightly touched, the vibration motor (10) and/or the buzzer (11) immediately sends a feedback signal to the fingertips and/or ears of the person pressing the key.

5. The information input device according to claim 4, wherein the keyboard body is provided with a selection switch (12) for selecting one of three options to control vibration, buzzing, or vibration-free and mute.

6. The information input device according to claim 1, wherein the keyboard body is provided with a function switch key (13), through which the keyboard input function of the key panel (3) is switched to a skateboard mouse function or a writing pad function; when the key panel (3) is switched to one of the skateboard mouse function or the writing pad function, the left-hand keyboard (1) and the right-hand keyboard (2) each activate a different one of the two functions for simultaneous use.

7. The information input device according to claim 6, wherein the keyboard body is provided with a mode light (14), and the mode light (14) is connected to the microprocessor; the mode light (14) includes a handwriting mode light, a keyboard mode light, and a mouse mode light.

8. The information input device according to claim 1, wherein the PCB electronic control board (4) is provided with a wireless connection module unit (15) capable of inputting human-computer interaction control instructions to other intelligent devices.
